# FASCICULE DE BREVET EUROPEEN

(11) **EP 0 677 630 B1**
(45) Date de publication et mention de la délivrance du brevet: **20.10.1999**
(21) Numéro de dépôt: 95420099.4
(22) Date de dépôt: 13.04.1995
(51) Int. Cl.: E04H 12/22, E02D 5/80

(54) **Piquet pour l'ancrage au sol d'un objet**
Bodenverankerungspfahl
Ground anchoring pole

(30) Priorité: 13.04.1994 FR 9404683
(43) Date de publication de la demande: 18.10.1995
(73) Titulaire: TELLURA, 17290 Aigrefeuille D'Aunis (FR)
(72) Inventeur: Ballu, François-Xavier, F-17000 La Rochelle (FR)
(74) Mandataire: Maureau, Philippe

(56) Documents cités:
- FR-A- 2 122 659
- FR-A- 2 605 346
- GB-A- 1 604 613
- GB-A- 2 127 061

## Description

La présente invention concerne un piquet pour l'ancrage au sol d'un objet, notamment pour l'ancrage d'une borne servant, avec d'autres bornes identiques, à la délimitation d'un terrain.

Une telle borne, dite "borne de géomètre", doit être parfaitement fixée au sol pendant une durée importante, pouvant atteindre plusieurs décennies.

A cet effet, il est connu de prévoir un piquet d'ancrage tubulaire ouvert à ses extrémités, dans lequel sont engagées des tiges métalliques, qui sont rigides mais susceptibles d'être courbées. Après enfoncement du piquet dans le sol, les tiges sont poussées axialement au moyen d'un mandrin engagé dans le piquet. En pénétrant dans le sol, elles viennent se courber vers l'extérieur selon des trajectoires plus ou moins hélicoïdales et constituent, ainsi, un ancrage solide du piquet.

Les piquets de ce type sont connus depuis longtemps, par exemple par le brevet US 1 370 334 ou le brevet allemand 910 126.

Dans l'ensemble des piquets existants, l'extrémité du tube destinée à être insérée dans le sol comprend une pièce rapportée présentant une paroi contre laquelle les tiges viennent porter au cours de leur enfoncement, ce qui provoque leur déviation vers l'extérieur et leur courbure.

Le brevet français enregistré sous le n° 86 14562 et publié sous le n° 2 605 346 décrit un piquet de ce type, comprenant un tube muni à son extrémité destinée à être enfoncée dans le sol d'une pièce plate rapportée. Cette pièce comprend une partie venant s'emmancher et se fixer dans l'extrémité du tube, sensiblement selon le diamètre de celui-ci, et une partie dépassant de l'extrémité du tube, qui constitue une pointe d'enfoncement. Une ouverture est aménagée principalement dans la partie engagée dans l'intérieur du tube. Les tiges, dont l'extrémité présente une amorce de courbure appropriée, traversent cette ouverture et viennent porter, au cours de leur enfoncement, contre la paroi de la pièce délimitant cette ouverture en partie inférieure, ce qui provoque leur déviation et courbure précitées.

D'une manière générale, les piquets à pièce d'extrémité rapportée présentent l'inconvénient d'être complexes à fabriquer.

En effet, leur fabrication implique le façonnage de la pièce d'extrémité, puis sa mise en place et sa fixation solide dans l'extrémité du tube. Les multiples opérations qui sont nécessaires grèvent le prix de revient d'un tel piquet.

La liaison entre le tube et la pièce peut être amenée à subir des contraintes importantes en cas de sol dur et doit être particulièrement solide. Notamment, cette liaison est réalisée par sertissage du tube sur la pièce, ce qui est une opération relativement complexe à réaliser et peut affaiblir la résistance mécanique de l'extrémité du tube.

De plus, le tube, les tiges et cette pièce sont métalliques et doivent être protégés par un traitement approprié, notamment par galvanisation à chaud, réalisé avant assemblage. L'assemblage de la pièce au tube présente l'inconvénient de détruire ce revêtement de protection, de sorte que la longévité dans le temps de l'ancrage n'est plus assurée.

En outre, pour des questions de coût, les pièces précitées ne sont fabriquées qu'en des dimensions spécifiques, correspondant à des diamètres de tube déterminés, et comprennent des ouvertures de dimensions déterminées ne pouvant recevoir les tiges au-delà d'un certain diamètre. Or, il s'avère en pratique nécessaire d'adapter le piquet à la nature spécifique du sol dans lequel doit se réaliser l'ancrage, en jouant sur les diamètres de tube ou de tiges. Les possibilités d'adaptation limitées des matériels existants ne leur permettent pas de satisfaire tous les besoins spécifiques des utilisateurs.

La présente invention vise à remédier à l'ensemble de ces inconvénients en fournissant un piquet simple à fabriquer, résistant dans le temps et pouvant être adapté aux besoins spécifiques des utilisateurs, tout en assurant un ancrage aussi solide que les piquets existants.

Le piquet qu'elle concerne est du type précité comprenant, d'une part, une portion tubulaire dont l'extrémité destinée à être enfoncée dans le sol est prolongée par une paroi, disposée sensiblement selon le diamètre de cette portion tubulaire, dans laquelle est aménagée une ouverture et, d'autre part, des tiges engagées dans ladite portion tubulaire ainsi qu'au travers de ladite ouverture, ces tiges venant porter contre cette paroi lorsqu'elles sont déplacées par rapport au piquet en direction de ladite extrémité, ce qui provoque leur déviation vers l'extérieur du piquet et leur courbure.

Selon l'invention, la portion tubulaire du piquet et la paroi qui prolonge son extrémité destinée à être enfoncée dans le sol constituent une seule et même pièce.

L'invention se démarque par conséquent des piquets connus jusqu'alors par l'élimination de la pièce rapportée à l'extrémité de la portion tubulaire, que comprennent systématiquement ces piquets depuis leur origine.

Le piquet selon l'invention présente de nombreux avantages.

Tout d'abord, il est particulièrement simple à réaliser puisqu'il peut être réalisé à partir d'un même tube métallique, dans lequel il suffit de percer les trous permettant le passage des tiges dans les zones adéquates de la paroi du tube, puis dont il suffit d'écraser l'extrémité, à l'aide d'un outil approprié, pour obtenir la paroi précitée. L'ouverture est ensuite aménagée dans cette paroi et les tiges sont engagées au travers de ces trous puis au travers de cette ouverture.

Aucune liaison mécanique n'est nécessaire entre la portion tubulaire du piquet et sa portion plane, de sorte que le piquet selon l'invention est particulièrement résistant même en cas de sol dur conduisant à l'exercice de contraintes élevées sur l'extrémité du piquet.

De plus, le piquet peut être galvanisé à chaud après façonnage. Aucune opération ultérieure sur celui-ci ne vient détériorer cette galvanisation.

En outre, les piquets peuvent être façonnés facilement et rapidement dans des tubes de diamètres très variés, et la largeur utile de l'ouverture aménagée dans la paroi est moins limitée que dans les piquets antérieurement connus. Il est dès lors possible de donner à cette ouverture une largeur lui permettant de recevoir un grand nombre de diamètres de tiges. Le piquet selon l'invention est ainsi adaptable, quant au diamètre du tube ou au diamètre des tiges, à chaque demande spécifique des utilisateurs.

Le piquet selon l'invention est constitué par un tube métallique, dont l'une des extrémités est écrasée de manière à rapprocher deux zones diamétralement opposées de ce tube jusqu'à ce qu'elles soient en contact l'une de l'autre et qu'elles soient aplaties, pour former ladite paroi d'extrémité, les trous de passage des tiges hors de la portion tubulaire du piquet étant aménagés dans les zones inclinées de transition entre la portion non écrasée et la portion écrasée du tube.

Avantageusement, la paroi comprenant l'ouverture est bordée par deux nervures longitudinales de rigidification permettant d'éliminer tout risque de pliage de cette paroi par rapport à la portion tubulaire au cours de l'enfoncement. Lorsque cette paroi est obtenue par écrasement de l'extrémité d'un tube métallique, il suffit de contenir latéralement la paroi du tube et d'emboutir simultanément le tube au niveau de son axe, perpendiculairement au plan de contention, pour obtenir cette paroi et ces deux nervures.

De préférence, chaque trou par lequel une tige traverse la portion tubulaire est décalé latéralement par rapport à la partie de l'ouverture que traverse l'extrémité recourbée de la tige. Par ce positionnement les trous, les tiges sont placées légèrement en oblique par rapport à l'axe du tube lorsque leur extrémité est engagée dans l'ouverture. Il en résulte qu'au cours de leur déplacement en direction de l'extrémité du piquet destinée à être enfoncée dans le sol, elles se déforment selon une trajectoire plus ou moins hélicoïdale leur permettant d'occuper, après déformation, une superficie importante et donc d'assurer un parfait ancrage.

Suivant une forme de réalisation préférée de l'invention, la paroi plane prolongeant la portion tubulaire comprend des rainures ou évidements aménagés à partir du bord inférieur de l'ouverture et en direction de l'extrémité du piquet, permettant de faciliter l'introduction des extrémités recourbées des tiges dans l'ouverture lors de l'engagement des tiges dans ladite portion tubulaire.

Pour sa bonne compréhension, l'invention va être à nouveau décrite ci-après, en référence au dessin schématique annexé représentant, à titre d'exemple non limitatif, une forme de réalisation préférée du piquet qu'elle concerne.
La figure 1 en est une vue en perspective ;
la figure 2 en est une vue en coupe selon la ligne II-II de la figure 1 et
la figure 3 en est une vue en bout.

Les figures représentent sous différents angles un piquet 2 pour l'ancrage au sol d'un objet, notamment d'une borne, dite "borne de géomètre", permettant avec d'autres bornes identiques de délimiter un terrain.

Le piquet 2 comprend un tube métallique 3 et des tiges 4 engagées dans ce tube 3, qui débouchent sur l'extérieur au niveau de l'extrémité 2a du piquet 2 destinée à être engagée dans le sol.

Le tube 3 présente une portion 3a purement tubulaire, à l'exception d'un collet 5 aménagé dans l'extrémité 2b du piquet 2 non destinée à être engagée dans le sol, ce collet 5 permettant la fixation d'une tête de signalisation (non représentée).

Il présente également une portion 3b façonnée par emboutissage, comprenant une paroi centrale 6 bordée par deux nervures latérales 7, cette portion 3b se terminant par deux pans coupés formant une pointe d'enfoncement 8. Comme le montrent les figures, la paroi 6 et les nervures 7 s'étendent dans le prolongement de la portion tubulaire 3a, la paroi 6 étant disposée sensiblement sur l'axe de cette portion 3a, parallèlement à celui-ci. Les parois extérieures des nervures 7 sont disposées sensiblement dans le prolongement de cette portion 3a.

Des trous 9 diamétralement opposés, permettant le passage avec possibilité de coulissement des tiges 4, sont aménagés dans les parois 10 faisant transition entre les portions 3a et 3b.

Une ouverture 11 est aménagée dans la paroi 6, à distance des trous 9.

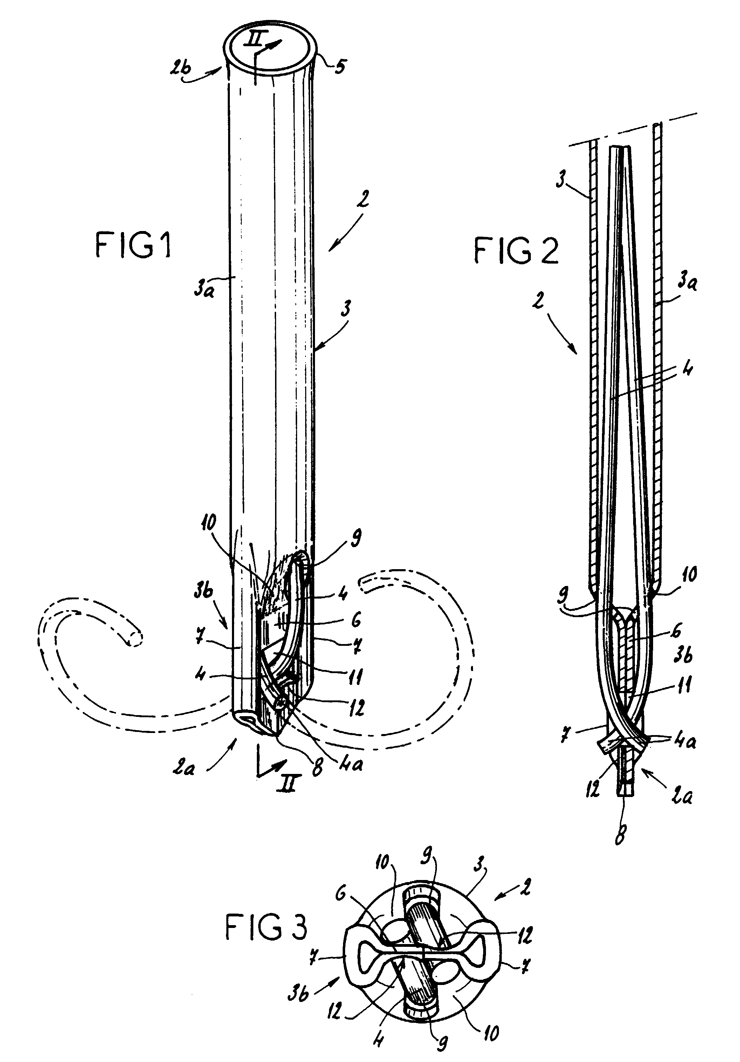

La paroi 6 comprend en outre deux rainures 12 s'étendant sur chacune de ses faces, à partir du bord de l'ouverture 11 et en direction de l'extrémité 2a, ces rainures 12 étant disposées de part et d'autre de l'axe médian du piquet 2, comme le montre la figure 3.

Les tiges 4 sont en majeure partie rectilignes et présentent une extrémité 4a recourbée. Elles sont engagées dans le piquet 2 au travers des trous 9 et au travers de l'ouverture 11, dans laquelle elles se croisent, leur extrémité recourbée 4a venant porter contre la surface de la paroi 6 délimitant l'ouverture 11 en partie inférieure.

En pratique, le piquet 2 est tout d'abord enfoncé dans le sol. Les deux nervures 7 permettent d'éliminer tout risque de pliage de la paroi 6 par rapport à la portion tubulaire 3a.

Une fois la profondeur adéquate atteinte, les tiges 4 sont poussées axialement dans le sol à l'aide d'un mandrin (non représenté) enfoncé dans l'extrémité 2b du piquet 2. Elles viennent alors porter contre la surface de la paroi 6 qui délimite l'ouverture 11 en partie inférieure et se déforment contre elle. Le positionnement diamétralement opposé des trous 9 fait que chaque trou 9 est décalé latéralement par rapport à la partie de l'ouverture 11 dans laquelle est engagée l'extrémité recourbée 4a de la tige 4 qui le traverse, ainsi que le montre clairement la figure 3. Les tiges 4 sont ainsi placées légèrement en oblique par rapport à l'axe du tube 3 lorsque leurs extrémités 4a sont engagées dans l'ouverture 11 et se déforment selon une trajectoire plus ou moins hélicoïdale, représentée en traits mixtes à la figure 1, leur permettant d'occuper, après déformation, une superficie importante. Elles assurent ainsi un parfait ancrage.

Comme cela apparait sur les figures, dans le piquet 2, les portions 3a et 3b sont façonnées par écrasement d'un même tube 3, cet écrasement étant obtenu en contenant latéralement la paroi du tube 3 et en emboutissant simultanément ce tube 3 au niveau de son axe, perpendiculairement au plan de contention, pour obtenir la paroi 6 et les nervures 7.

Ainsi, dans ce piquet 2, la portion tubulaire 3a et la paroi 6 constituent une seule et même pièce.

Ce piquet 2 présente de nombreux avantages.

Il est particulièrement simple à réaliser puisqu'il suffit de percer les trous 9 permettant le passage des tiges 4 dans les zones du tube 3 devant correspondre aux parois de transition 10, puis d'écraser, à l'aide d'un outil approprié, l'extrémité du tube 3 pour obtenir la paroi 6 précitée. L'ouverture 11 est ensuite aménagée dans cette paroi 6 et les tiges 4 sont engagées au travers des trous 9 puis au travers de cette ouverture 11. Les rainures 12 permettent de faciliter l'introduction des extrémités recourbées 4a des tiges 4 dans l'ouverture 11.

Aucune liaison mécanique n'est nécessaire entre la portion tubulaire 3a et la paroi 6, de sorte que le piquet 2 est particulièrement résistant même en cas de sol dur conduisant à l'exercice de contraintes élevées sur son extrémité 2a.

De plus, le piquet 2 peut être galvanisé à chaud après façonnage. Aucune opération ultérieure ne vient détériorer cette galvanisation.

En outre, différents piquets 2 peuvent être façonnés facilement et rapidement dans des tubes 3 de diamètres très variés, et la largeur utile de l'ouverture 11 aménagée dans la paroi 6 est moins limitée que dans les piquets antérieurement connus. Il est dès lors possible de donner à cette ouverture 11 une largeur lui permettant de recevoir un grand nombre de diamètres de tiges 4. Le piquet 2 est ainsi adaptable à chaque demande spécifique des utilisateurs.

## Revendications

1. Piquet (2) pour l'ancrage au sol d'un objet, notamment pour l'ancrage d'une borne servant, avec d'autres bornes identiques, à la délimitation d'un terrain, du type comprenant, d'une part, une portion tubulaire (3a) dont l'extrémité (3b) destinée à être enfoncée dans le sol est prolongée par une paroi (6), disposée sensiblement selon le diamètre de cette portion tubulaire (3a), dans laquelle est aménagée une ouverture (11) et, d'autre part, des tiges (4) engagées dans ladite portion tubulaire (3a) ainsi qu'au travers de ladite ouverture (11), ces tiges (4) venant porter contre cette paroi (6) lorsqu'elles sont déplacées par rapport au piquet (2) en direction de ladite extrémité, ce qui provoque leur déviation vers l'extérieur du piquet et leur courbure, piquet caractérisé en ce que sa portion tubulaire (3a) et la paroi (6) prolongeant son extrémité (2a) destinée à être enfoncée dans le sol constituent une seule et même pièce, ce piquet étant constitué par un tube métallique (3), dont une extrémité est écrasée de manière à rapprocher deux zones diamétralement opposées de ce tube jusqu'à ce qu'elles soient en contact l'une de l'autre et qu'elles soient aplaties, pour former ladite paroi d'extrémité (6), les trous (9) de passage des tiges (4) hors de la portion tubulaire (3a) étant aménagés dans les zones inclinées (10) de transition entre la portion non écrasée et la portion écrasée du tube.

2. Piquet selon la revendication 1, caractérisé en ce que la paroi (6) comprenant l'ouverture (11) est bordée par deux nervures longitudinales (7) de rigidification.

3. Piquet selon l'une des revendications 1 ou 2, caractérisé en ce que chaque trou (9) par lequel une tige (4) traverse la portion tubulaire (3a) est décalé latéralement par rapport à la partie de l'ouverture (11) que traverse 1' extrémité recourbée (4a) de la tige (4).

4. Piquet selon l'une des revendications 1 à 3, caractérisé en ce que la paroi plane (6) prolongeant la portion tubulaire (3a) comprend des rainures ou évidements (12) aménagés à partir du bord inférieur de l'ouverture (11) et en direction de l'extrémité (2a) du piquet (2).

## Patentansprüche

1. Pfahl zur Verankerung eines Gegenstands im Boden, insbesondere zur Verankerung einer Grenzmarke, die zusammen mit weiteren identischen Grenzmarken der Begrenzung eines Geländes dient, und aufweist: einerseits einen rohrförmigen Abschnitt (3a), dessen Ende (3b) dazu bestimmt ist, im Boden versenkt zu werden, und durch eine Wand (6) verlängert ist, die im wesentlichen entlang des Durchmessers des rohrförmigen Abschnitts (3a) angeordnet ist, in der eine Öffnung (11) eingearbeitet ist; und andererseits Stangen (4), die in dem rohrförmigen Abschnitt (3a) sowie durch die Öffnung (11) hindurch eingeführt sind, wobei die Stangen (4) an der Wand (6) zum Anliegen kommen, wenn sie bezüglich des Pfahls (2) in der Richtung des Endes verschoben werden, wodurch ihre Ablenkung vom Stab aus nach außen und ihre Krümmung hervorgerufen werden, wobei der Pfahl dadurch gekennzeichnet ist, daß sein rohrförmiger Abschnitt (3a) und die Wand (6), die sein Ende (2a) verlängert, das zur Versenkung im Boden bestimmt ist, ein und dasselbe Stück darstellen, wobei der Pfahl aus einem Metallrohr (3) besteht, bei dem ein Ende derart plattgedrückt ist, daß zwei diametral gegenüberliegende Teile dieses Rohrs einander angenähert werden, bis sie zur Bildung der Endwand (6) miteinander in Berührung sind und abgeflacht sind, wobei die Durchtrittslöcher (9) für die Stangen (4) außerhalb des rohrförmigen Abschnitts (3a) in den geneigten Übergangsbereichen (10) zwischen dem nichtplattgedrückten Abschnitt und dem plattgedrückten Abschnitt des Rohrs eingearbeitet sind.

2. Pfahl nach Anspruch 1, dadurch gekennzeichnet, daß die die Öffnung (11) aufweisende Wand (6) von zwei Längsrippen (7) zur Verstärkung umrandet ist.

3. Pfahl nach einem der Ansprüche 1 oder 2, dadurch gekennzeichnet, daß jedes Loch (9), durch welches eine Stange (4) den rohrförmigen Abschnitt (3a) durchquert, bezüglich des Öffnungsteils (11), den das umgebogene Ende (4a) der Stange (4) durchquert, seitlich versetzt ist.

4. Pfahl nach einem der Ansprüche 1 bis 3, dadurch gekennzeichnet, daß die den rohrförmigen Abschnitt (3a) verlängernde ebene Wand (6) Rillen oder Aussparungen (12) aufweist, die von dem unteren Rand der Öffnung (11) ausgehend und zu dem Ende (2a) des Pfahls (2) hin eingearbeitet sind.

## Claims

1. Stake (2) for anchoring an object in the ground, particularly for anchoring a boundary marker used, together with other identical boundary markers, for delimiting an area of land, of the type comprising, on the one hand, a tubular portion (3a), of which the end (3b) intended to be forced into the ground is extended by a wall (6), arranged substantially along the diameter of this tubular portion (3a), in which an opening (11) is made and, on the other hand, rods (4) engaged in the said tubular portion (3a) and through the said opening (11), these rods (4) coming to bear against this wall (6) when they are displaced relative to the stake (2) in the direction of the said end, which gives rise to their deflection towards the outside of the stake and their curvature, said stake being characterized in that its tubular portion (3a) and the wall (6) extending its end (2a) intended to be forced into the ground constitute one and the same component, this stake consisting of a metal tube (3), of which one end is crushed so as to bring two diametrically opposed zones of this tube together until they are in contact with each other and are flattened in order to form the said end wall (6), the holes (9) for the passage of the rods (4) outside the tubular portion (3a) being made in the inclined transition zones (10) between the uncrushed portion and the crushed portion of the tube.

2. Stake according to Claim 1, characterized in that the wall (6) comprising the opening (11) is bordered by two longitudinal stiffening ribs (7).

3. Stake according to one of Claims 1 or 2, characterized in that each hole (9) via which a rod (4) passes through the tubular portion (3a) is offset laterally with respect to that part of the opening (11) which the curved end (4a) of the rod (4) passes through.

4. Stake according to one of Claims 1 to 3, characterized in that the planar wall (6) extending the tubular portion (3a) comprises grooves or recesses (12) which are made from the lower edge of the opening (11) towards the end (2a) of the stake (2).
